Europäisches Patentamt

**(19)** European Patent Office

Office européen des brevets

**(11)** Publication number : **0 355 040 B1**

**(12)** # EUROPEAN PATENT SPECIFICATION

**(45)** Date of publication of patent specification :
07.01.93 Bulletin 93/01

**(51)** Int. Cl.⁵ : **B65G 59/04**

**(21)** Application number : **89202093.4**

**(22)** Date of filing : **15.08.89**

**(54)** Process for handling porous fabric sheets.

**(30)** Priority : **15.08.88 US 231923**

**(43)** Date of publication of application :
21.02.90 Bulletin 90/08

**(45)** Publication of the grant of the patent :
07.01.93 Bulletin 93/01

**(84)** Designated Contracting States :
CH DE FR GB IT LI NL

**(56)** References cited :
FR-A- 2 561 221

**(73)** Proprietor : SHELL INTERNATIONALE
RESEARCH MAATSCHAPPIJ B.V.
Carel van Bylandtlaan 30
NL-2596 HR Den Haag (NL)

**(72)** Inventor : Nathoo, Nazim Safarali
14323 Chadbourne
Houston Texas 77079 (US)
Inventor : Giannopoulos, Fanis
2063 Church Street
Scotch Plains New Jersey 07076 (US)

EP 0 355 040 B1

## Description

This invention relates to the manipulation of porous fabric sheets, and more particularly to a process for removing the top sheet from a stack of porous fabric sheets. Glass-fibre fabric sheets are employed in the production of composite materials. In many of these operations pre-cut sheets of the fabrics are stacked. In a typical current process stacks of sheets are separated by hand, the sheets are removed one by one, starting with the top layer. There is a need to develop a more advanced, automated process.

U.S. Patent 3,415,388 discloses a device for the removal of pre-shaped foils from a foil stack and insertion into production moulds, in installations for the production of foil-wrapped chocolate bodies. For obliquely arranged stacks of preshaped foils, the device has a suction head that is obliquely guided by a stationary guide rail against the bias of a spring. The suction head is geometrically similar to the preformed foil bodies and is three-dimensionally reduced with respect thereto at least in the outer edge region by multiple of the foil thickness, for example 1-2 millimeters to produce a gap having a wedge shape in cross-section. Another patent of interest is U.S. Patent 4,483,702 wherein a porous fibreglass cover is used with a vacuum holder system so as to provide passages for residual air and adjacent passages that tend to equalize when a sheet of glass is held against the porous cover. The apparatus is used to manipulate sheets of matter such as glass sheets.

Reference may also be made to U.S. Patent 3,780,884 which discloses an article transfer device comprising a first conveyor, a platform positioned to permit transfer of articles between said platform and said first conveyor, a vacuum manifold mounted above said platform, a plurality of vacuum cups depending from said manifold and each having a bore communicating the gripping surface thereof with said manifold, elevating means for raising and lowering said platform into and out of a position to cause articles carried by said platform to engage at least one of said vacuum cups, a shuttle extendable to a position underlying said vacuum cups and retractable to a position removed from said vacuum cups, and a second conveyor positioned to permit transfer of articles between said shuttle and said second conveyor.

None of these references specifically tackle the problem of how to remove from a stack of glass-fibre sheets just the single top sheet and no more.

The present invention utilizes the drag force generated by the suction of air through the fabric sheet, the air flows through a series of flow openings provided in a suction head, hereinafter referred to as flow locator. The drag force should be just large enough to overcome the weight of the fabric sheet, so causing the fabric to become attached or coupled to the flow locator. The flow locator can then be transported to another position in the process line, e.g. above or in an open mould. Stopping the air flow effects the release of the fabric sheet from the locator.

The present invention relates to a process for separating the top layer of porous fabric sheet from a stack of porous glass fibre sheets, said process including the steps of: providing an air flow locator having at least one flow opening defined therethrough; moving air through said flow opening; moving the flow locator above and adjacent the top layer of porous fabric; coupling said flow locator to the said layer of porous fabric; and moving said flow locator and said layer of porous fabric coupled to said flow locator away from said stack of porous fabrics, wherein the coupling of the flow locator to said layer of porous fabric is effected by flowing air through said layer of porous fabric at a velocity sufficient to create drag forces on said fabric at least equal to the weight of said fabric layer, and wherein the actual flow (Qactual) required through the total area of flow openings(S) equals:

$$Q_{actual} = \frac{\text{Area of Fabric}}{\text{Total Area of Flow Opening(S)}} \times Q \text{ balance}, \quad (1)$$

wherein

$$Q \text{ balance} = V_{balance} \times \text{Total Area of Flow Opening(S)}, \quad (2)$$

wherein

$$\frac{\Delta P}{\Delta L} = \frac{150 \,\mu V_{balance}\,(1 - \varepsilon)^2}{D_p^2 \varepsilon^3} + \frac{1.75 \,\delta V_{balance}\,(1 - \varepsilon)}{D_p} \frac{(1 - \varepsilon)}{\varepsilon^3} \quad (3)$$

wherein

$\varepsilon$ = void fraction in material (% vol. $10^{-2}$)
$\delta$ = density of glass fibre (kg/m$^3$ x 0.0625)
$\mu$ = air viscosity (Pa.s x 0.021)
$D_p$ = thickness of fibres in the fabric (m. x 3.3)
$V_{balance}$ = average velocity of air flow (m.min$^{-1}$ x 3.3)
$\Delta L$ = thickness of fabric sheet (m x 3.3)
$\Delta P$ = pressure drop across material (Pa. x 0.02); wherein
(4) $\Delta P$ equals or exceeds Fabric weight/area (expresssed in comparable dimensional units : i.e. kg/m$^2$ x 0.02)

The invention also provides for a modification of the novel process in which the flow rate through the fabric sheet and through the flow openings, subsequent to separating the top sheet from the stack is increased by a factor of at most 2.0 to allow for difficult conditions that may be expected during the further transport and handling of the fabric sheet which is sucked to the flow locator. In a preferred embodiment of the process of this invention the area of each flow opening is selected within the range of from 1/180 to 1/100 of the total area of the fabric sheet.

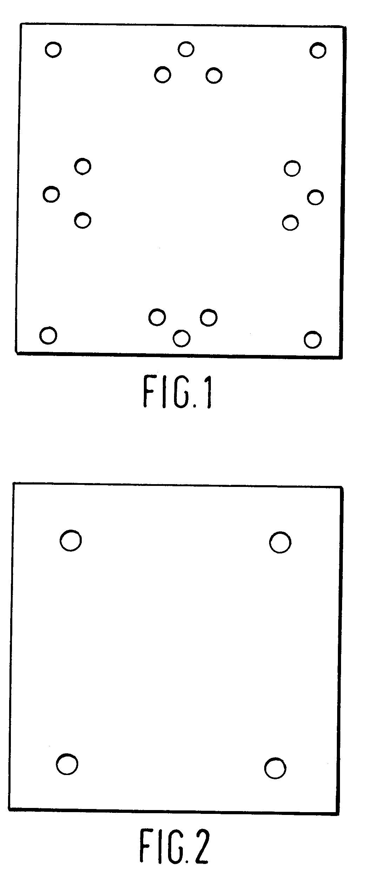

Typical parameter values for different fabrics are shown in Table 1, which also includes flow velocities for different fabrics obtained during pick-place operations using a gantry robot to manipulate 457 mm square fabric stacks with 403 mm square flow locators illustrated in Figures 1 and 2 having the flow opening patterns, these openings having diameters of 10, or 25 mm., respectively

Basically, the flow locator is a simple horizontal, relatively flat box which is connected via one or more flexible tubings to an air blower which blows the sucked-in air to the atmosphere. The flow-locator is also connected to suitable manipulating equipment thus enabling the lowering of the flow-locator to the stack of fabric sheets and the removal of the picked-up sheet to another working position.

Figures 1 and 2 show flat bottom views of two different flow locators.

Referring now to Figure 1, the pattern of flow openings used in the bottom of the flow locator is shown. The location of the flow openings were selected to keep a uniform distribution in the four quadrants of the fabric. This pattern of 16 holes was used to pick up knitted and woven as well as chopped strand fabric, with the exception of the continuous random mat.

Referring now to Figure 2, a flow locator is shown having four flow openings. The location of the four flow openings as well as their diameter was selected to pick up and manipulate continuous random mat.

The advantages of the present invention allow the fabric, in single or multipe layers, to be picked up and manipulated without support on the back-side during manipulation operations. The invention also allows the manipulation process to be easily automated for economic manufacture of various articles, without damage to the layers of fabric.

## EXAMPLE

4 Different types of 457 mm square glass fabric sheets were tested on their pick-up performance at the minimum air-flow rate calculated in accordance with this invention. In each experiment this minimum air-flow showed to be just right for pick-up no more than the top-sheet of a stack of 40 sheets. Immediately after pick-up the air-flow was increased by 20 to 50% to allow for stronger coupling of the single sheet to the flow-locator and thus to allow for easier removal and transport of the flow-locator to another working position. It was also shown that the air-flow (Q-actual) could be increased with 10 to 20% without risking to pick-up the next sheet(s) from the stack.

The various fabric sheets tested were respectively:
(1) continuous random mat, (2) chopped strand mat, (3) knitted biax fabric Proform/Kyntex CD 190, and (4) knitted triax fabric Proform/Kyntex CDB 340. Other parameters of the fabric sheets are marked in the Table.

### TABLE

| Sample | $\Delta P$ | $\Delta L$ | $\epsilon$ | $D_p$ | $Qa$ |
|---|---|---|---|---|---|
| | g | cm | % | cm | $m.min^{-1}$ |
| 1 | 95.6 | 0.33 | 94 | 0.033 | 488 |
| 2 | 95.3 | 0.07 | 76 | 0.033 | 305 |
| 3 | 134.5 | 0.07 | 67 | 0.110 | 457 |
| 4 | 244.5 | 0.10 | 54 | 0.111 | 335 |

## Claims

1. A process for separating the top layer of porous fabric sheet from a stack of porous glass fibre sheets, said process including the steps of:
   - providing an air flow locator having at least one flow opening defined therethrough;

- moving air through said flow opening;
- moving the flow locator above and adjacent the top layer of porous fabric;
- coupling said flow locator to the said layer of porous fabric; and
- moving said flow locator and said layer of porous fabric coupled to said flow locator away from said stack of porous fabrics,

wherein the coupling of the flow locator to said layer of porous fabric is effected by flowing air through said layer of porous fabric at a velocity sufficient to create drag forces on said fabric at least equal to the weight of said fabric layer, and wherein the actual flow (Qactual) required through the total area of flow openings (S) equals:

$$Q_{actual} = \frac{\text{Area of Fabric}}{\text{Total Area of Flow Opening(S)}} \times Q_{balance}, \quad (1)$$

wherein

$$Q_{balance} = V_{balance} \times \text{Total Area of Flow Opening(S)}, \quad (2)$$

wherein

$$\frac{\Delta P}{\Delta L} = \frac{150\,\mu V_{balance}\,(1-\varepsilon)^2}{D_p^2 \varepsilon^3} + \frac{1.75\,\delta V_{balance}}{D_p}\frac{(1-\varepsilon)}{\varepsilon^3} \quad (3)$$

wherein

$\varepsilon$ = void fraction in material (% vol.$10^{-2}$)

$\delta$ = density of glass fibre (kg/m$^3$ x 0.0625)

$\mu$ = air viscosity (Pa.s x 0.021)

$D_p$ = thickness of fibres in the fabric (m. x 3.3)

$V_{balance}$ = average velocity of air flow (m.min$^{-1}$ x 3.3)

$\Delta L$ = thickness of fabric sheet (m x 3.3)

$\Delta P$ = pressure drop across material (Pa. x 0.02); wherein

(4) $\Delta P$ equals or exceeds Fabric weight/area (expresssed in comparable dimensional units : i.e. kg/m$^2$ x 0.02)

2. The process of claim 1 comprising selecting the area of each flow opening within the range of 1/180 to 1/100 of the total area of the fabric sheet.

**Patentansprüche**

1. Verfahren zum Trennen der oberen Lage, bestehend aus einem porösen Textilmaterialblatt oder einer porösen Textilmaterialplatte von einem Stapel von porösen Glasfaserblättern oder Glasfaserplatten, wobei das Verfahren die Schritte umfaßt des:
    - Schaffens eines Luftströmungslokators, der wenigstens eine Strömungsöffnung hat, die sich durch ihn hindurch erstreckt;
    - Bewegens von Luft durch Strömungsöffnung;
    - Bewegens des Strömungslokators über die obere Lage aus porösem Textilmaterial und nahe zu dieser,
    - Koppelns des Strömungslokators mit der Lage aus porösem Textilmaterial; und des
    - Bewegens des Strömungslokators und der Lage aus porösem Textilmaterial, die mit dem Strömungslokator gekoppelt ist, von dem Stapel aus porösen Textilmaterialien weg, wobei

das Koppeln des Strömungslokators mit der Lage aus porösem Textilmaterial bewirkt wird durch das Strömen von Luft durch die Lage aus porösem Textilmaterial mit einer Geschwindigkeit, die ausreichend ist, um Zugkräfte an dem Textilmaterial zu erzeugen, die wenigstens gleich dem Gewicht der Textilmateriallage sind, und wobei die erforderliche aktuelle Strömung (Q aktuell) durch die Gesamtfläche der Strömungsöffnung bzw. Strömungsöffnungen hindurch wie folgt definiert ist:

$$Q_{aktuell} = \frac{\text{Fläche des Textilmaterials}}{\text{Gesamtfläche der Strömungsöffnung(en)}} \times Q_{Balance} \quad (1)$$

wobei

$$Q_{Balance} = V_{Balance} \times \text{Gesamtfläche der Strömungsöffnung(en)}, \quad (2)$$

wobei

$$\frac{\Delta P}{\Delta L} = \frac{150\,\mu V_{Balance}\,(1-\varepsilon)^2}{D_p^2 \varepsilon^3} + \frac{1{,}75\,\delta V_{Balance}}{D_p}\frac{(1-\varepsilon)}{\varepsilon^3} \quad (3)$$

worin

$\varepsilon$ = Leerraumanteil im Material (% Vol. $10^{-2}$)

**4**

$\delta$ = Dichte der Glasfaser (kg/m³ x 0,0625)
$\mu$ = Luftviskosität (Pa.s x 0,021 )
$D_p$ = Dicke der Fasern in dem Textilmaterial (m. x 3,3)
V Balance = mittlere Geschwindigkeit der Luftströmung (m.min$^{-1}$ x 3,3)
$\Delta L$ = Dicke des Textilmaterialblattes bzw. der Textilmaterialplatte (m x 3,3)
$\Delta P$ = Druckabfall an dem Material (Pa. x 0,02); wobei
(4) $\Delta P$ gleich dem Textilmaterialgewich/Fläche ist oder dieses überschreitet (ausgedrückt in vergleichbaren Dimensionseinheiten, d. h. kg/m² x 0,02)

2.	Verfahren nach Anspruch 1, umfassend das Auswählen der Fläche jeder Strömungsöffnung in dem 1/180 bis 1/100 der Gesamtfläche des Textilmaterialblattes, der Textilmaterialbahn bzw. der Textilmaterialplatte.


## Revendications

1.	Procédé de séparation de la couche supérieure de la feuille de tissu poreux d'un empilement de feuilles de fibres de verre poreuses, ledit procédé incluant les étapes de :
	- fournir un directeur de flux ayant au moins un orifice d'écoulement passant à travers ;
	- faire déplacer l'air à travers ledit orifice d'écoulement ;
	- déplacer le directeur de flux au-dessous et à proximité de la couche supérieure de tissu poreux ;
	- accoupler ledit directeur de flux à ladite couche de tissu poreux ; et
	- déplacer ledit directeur de flux et ladite couche de tissu poreux accouplée audit directeur de flux au-delà de ladite pile de feuille de tissu poreux,
	dans lequel l'accouplement du directeur de flux à ladite couche de tissu poreux est effectué en insufflant de l'air à travers ladite couche de tissu poreux à une vitesse suffisante pour développer des forces d'attraction sur ledit tissu au moins égales au poids de ladite feuille de tissu, et dans lequel le flux réel (Qréel) nécessaire à travers l'aire totale des orifices d'écoulement vaut :

$$Q_{réel} = \frac{\text{Aire du tissu}}{\text{Aire total des orifices d'écoulement}} \times Q_{balance} \quad (1)$$

	dans laquelle :

$$Q_{balance} = V_{balance} \times \text{Aire totale des orifices d'écoulement} \quad (2)$$

	dans laquelle

$$\frac{\Delta P}{\Delta L} = \frac{150\, \mu\, V_{balance}\,(1-\varepsilon)^2}{D_p^2 \varepsilon^3} + \frac{1.75\, \delta\, V_{balance}}{D_p} \frac{(1-\varepsilon)}{\varepsilon^3} \quad (3)$$

	dans laquelle :
	$\varepsilon$ = fraction de vide dans le matériau (% vol. 10$^{-2}$)
	$\delta$ = densité des fibres de verre (kg/m³ x 0,0625)
	$\mu$ = viscosité de l'air (Pa.s x 0,021)
	$D_p$ = épaisseur de fibres dans le tissu (m. x 3,3)
	$V_{balance}$ = vitesse moyenne de l'écoulement d'air (m.min$^{-1}$x 3,3)
	$\Delta L$ = épaisseur de la feuille de tissu (m x 3,3)
	$\Delta P$ = perte de charge à travers le matériau (Pa. x 0,22) ;
	dans laquelle :
	(4) $\Delta P$ est égal ou dépasse le poids par unité de surface du tissu, exprimé dans les mêmes unités dimensionnelles, c'est-à-dire kg/m² x 0,02.

2.	Procédé selon la revendication 1, qui comprend de sélectionner l'aire de chaque orifice d'écoulement dans l'intervalle de 1/180 à 1/100 de l'aire totale de la feuille de tissu.

FIG.1

FIG.2